# EUROPÄISCHE PATENTSCHRIFT

(11) **EP 3 090 916 B1**
(45) Veröffentlichungstag und Bekanntmachung des Hinweises auf die Patenterteilung: **18.03.2020**
(21) Anmeldenummer: 16167855.2
(22) Anmeldetag: 02.05.2016
(51) Int. Cl.: B61D 33/00

(54) **BAUEINHEIT, UMFASSEND EINE SITZEINRICHTUNG UND EINE HALTERUNG FÜR DIE SITZEINRICHTUNG, ZUR ANORDNUNG IN EINEM SCHIENENFAHRZEUG, VERFAHREN ZUM ÜBERFÜHREN DER SITZEINRICHTUNG VON EINER VERSTAUSTELLUNG IN EINE GEBRAUCHSSTELLUNG SOWIE SCHIENENFAHRZEUG MIT MINDESTENS EINER BAUEINHEIT**
ASSEMBLY COMPRISING A SEAT DEVICE AND A HOLDING ELEMENT FOR THE SEAT DEVICE, FOR ARRANGEMENT IN A RAILWAY VEHICLE, METHOD FOR TRANSFERRING THE SEAT DEVICE FROM A STOWED POSITION TO A USABLE POSITION AND RAILWAY VEHICLE WITH AT LEAST ONE ASSEMBLY
COMPOSANT, COMPRENANT UN SIEGE ET UNE FIXATION DE SIEGE, DESTINE A ETRE INSTALLE DANS UN VEHICULE SUR RAILS, PROCEDE DE TRANSFERT DU SIEGE D'UNE POSITION DE RANGEMENT DANS UNE POSITION D'UTILISATION ET VEHICULE SUR RAIL COMPRENANT UN TEL COMPOSANT

(30) Priorität: 06.05.2015 DE 102015208351
(43) Veröffentlichungstag der Anmeldung: 09.11.2016
(73) Patentinhaber: Bombardier Transportation GmbH, 10785 Berlin (DE)
(72) Erfinder: Pramper, Rainer, 1100 Wien (AT); Strauss, Christian, 1090 Wien (AT); Nitsche, Gerhart Lukas, 1230 Wien (AT); Monarth, Andreas, 1090 Wien (AT)
(74) Vertreter: Patentanwälte Bressel und Partner mbB

(56) Entgegenhaltungen:
- DE-A1- 10 241 250
- DE-C- 309 572
- US-A- 187 817
- US-A- 464 046

## Beschreibung

### Gebiet der Erfindung:

Die vorliegende Erfindung betrifft eine Sitzeinrichtung und eine Halterung für die Sitzeinrichtung umfassende Baueinheit zur Anordnung in einem Schienenfahrzeug, insbesondere in einem Straßenbahn-Fahrzeug, ein Verfahren zum Überführen der Sitzeinrichtung von einer Verstaustellung in eine Gebrauchsstellung sowie ein Schienenfahrzeug mit der Baueinheit. Die Sitzeinrichtung ist vorzugsweise in einem Fahrerstand des Fahrzeuges angeordnet.

### Stand der Technik und Hintergrund der Erfindung:

Verstaubare Sitze für Fahrzeuge werden eingesetzt, um flexibel auf sich verändernde Bedingungen reagieren zu können. Beispielsweise kann es erforderlich sein, den von den Sitzen eingenommenen Platz für bestimmte Objekte, wie zum Beispiel einen Rollstuhl oder Gepäckstücke, bereitzustellen. Hierzu ist in US 2004/0113451 A1 eine verstaubare Sitzanordnung für Fahrzeuge angegeben, die einen aus Sitzfläche und Rückenlehne, die verschwenkbar miteinander verbunden sind, gebildeten Sitz aufweisen, wobei der Sitz zwischen einer Gebrauchsstellung und zwei unterschiedlichen Parkstellungen bewegbar ist. Hierzu kann der Sitz entweder in der Fahrzeugrichtung bewegt oder um 90° gegenüber der Fahrzeugrichtung verschwenkt werden.

Eine andere Lösungsmöglichkeit für diesen Zweck ist in FR 2 668 909 A1 angegeben. In dieser Druckschrift ist eine modulare Sitzreihe beschrieben, die zum Zwecke des schnellen Platzschaffens unter ihre Trägerplattform versenkbar ist.

Um die Zugänglichkeit von Fahrzeugeinrichtungen, insbesondere in einem Krankenwagen, zu erleichtern, ist in DE 102 17 794 A1 für einen klappbaren Notsitz mit einer Sitzfläche, einer Rückenlehne und einer Kopfstütze angegeben, dass das Oberteil der Rückenlehne insbesondere zusammen mit der Kopfstütze um eine Hochachse verschwenkbar ist.

Aus CN 201530335 U ist ein Klappsitz mit einer Sitzfläche und einer Rückenlehne, die gegeneinander verschwenkbar sind, gezeigt.

In JP 2006-137265 A ist ein Klappsitz für ein Fahrzeug angegeben, dessen Sitzfläche gegen die Rückenlehne verschwenkbar ist. Der zusammengeklappte Sitz ist in einer Nische einer Fahrzeugwand untergebracht. Eine hierzu ähnliche Anordnung ist auch in GB 2 140 283 A beschrieben.

DE 10 2008 047 659 A1 gibt einen klappbaren Sitz in einer Fahrerkabine, insbesondere in einem schienengebundenen Fahrzeug, an. Der Sitz umfasst ein Haltegestell sowie eine von dem Haltegestell gehaltene und von einer Gebrauchsstellung zu einer Easy-Exit-Stellung und umgekehrt verschwenkbare Sitzfläche und verschwenkbare Rückenlehne. Die Sitzfläche und die Rückenlehne sind in der Easy-Exit-Stellung jeweils im Wesentlichen parallel zu einer Ebene angeordnet, die sich im Wesentlichen senkrecht zu den entsprechenden Ebenen erstreckt, in denen sich die Sitzfläche und die Rückenlehne in der Gebrauchsstellung befinden. Ein derartiger Sitz kann insbesondere als Fahrlehrersitz in der Fahrerkabine genutzt werden.

In DE 10 2009 034 681 A1 ist ferner ein Schienenfahrzeug mit einem Fahrerstand angegeben, der eine klappbare Sitzeinrichtung aufweist. Diese Sitzeinrichtung ist in ein Geschränk einschiebbar, in dem sie sich dann im eingeklappten Zustand befindet. Hierzu verfügt die Sitzeinrichtung über eine Sitzfläche und eine verschwenkbare Rückenlehne. Zum Einfahren der sich im eingeklappten Zustand befindenden Sitzeinrichtung in das Geschränk hinein und aus diesem heraus sind Teleskopschienen vorgesehen.

In DE 309 572 C ist ein nach beiden Seiten einstellbarer Sitz für Straßenbahnen beschrieben, der von einer Gebrauchsstellung in einen heruntergeklappten Zustand und umgekehrt überführbar ist. Dieser Sitz umfasst Seitenständer, in denen die Achse des Sitzes drehbar gelagert ist. An jeder Seite des Sitzes und an einem Punkt jedes Seitenständers ist das eine Ende von zwei Spreizen angelenkt, deren andere Enden um einen gemeinsamen Zapfen drehbar sind. Dieser Zapfen dient einem Stützhebel gleichzeitig als Drehpunkt. Mit dem anderen Ende stützt sich dieser Hebel gegen die Achse des Sitzes, wobei er hierzu den beiden Stellungen entsprechend mit zwei Rasten versehen ist, die zu beiden Seiten eines in der Längsrichtung des Hebels verlaufenden Schlitzes liegen, der sich beim Umklappen des Sitzes über die Achse schiebt.

US 187,817 A offenbart einen klappbaren Sitz, der an seitlichen Stützen über eine Achse an seinem hinteren Ende verschwenkbar gehalten wird. Obere Stangen, die mit einem Ende an den seitlichen Stützen angelenkt sind, sind über darin enthaltene sich bis zum anderen Ende erstreckende Längsschlitze mit einem vorderen Ende des Sitzes verbunden. Zur Überführung des Sitzes in eine senkrechte Klappstellung werden die Achse des Sitzes in einem Schlitz in den seitlichen Stützen nach unten und das vordere Ende des Sitzes in den Schlitzen der oberen Stangen nach oben verfahren.

### Der Erfindung zugrunde liegende Probleme und Aufgaben:

Für die Installation von Sitzen in Schienenfahrzeugen, insbesondere in einem Fahrerstand einer Straßenbahn, generell aber auch von anderen Schienenfahrzeugen, ist es besonders wichtig, diese Sitzeinrichtungen möglichst platzsparend unterzubringen. Dies gelingt mit den vorhandenen Sitzen nur unvollkommen. Insbesondere die zuletzt genannten in einem Geschränk der Fahrerkabine untergebrachten Sitze erfordern eine erhebliche Einbautiefe, die häufig nicht zur Verfügung steht oder anderweitig benötigt wird. Insbesondere wenn das Fahrzeug eine vorgegebene Gesamtbreite nicht überschreiten darf, kann es durch diese Unterbringung zu Platzproblemen kommen. Darüber hinaus sind einige der bekannten Bauformen, insbesondere diejenigen, bei denen ein Klappsitz in einer Wandnische versenkbar ist, für den Einbau in den Fahrerstand einer Straßenbahn oder eines anderen Schienenfahrzeuges nicht geeignet, da diese Sitze in der Verstaustellung dadurch, dass die Sitzfläche von der Gebrauchsstellung aus nach oben geklappt wird, oberhalb der Sitzfläche Raum beanspruchen würden, der aber nicht zur Verfügung steht. Denn durch die aufgerichtete Rückenlehne wäre die Rundumsicht des Fahrers beeinträchtigt.

Von daher liegt der vorliegenden Erfindung die Aufgabe zugrunde, eine Anordnung für eine Sitzeinrichtung in einem Schienenfahrzeug, insbesondere einer Straßenbahn, zu finden, bei der die Sitzeinrichtung in der Gebrauchsstellung eine bequeme Sitzhaltung ermöglicht und in der Verstaustellung nur geringen Raum beansprucht, sodass die Betriebssicherheit des Fahrzeuges nicht beeinträchtigt ist. Des Weiteren ist es sehr wichtig, dass die Sitzeinrichtung von der Gebrauchsstellung in die Verstaustellung schnell überführbar ist, um in einem Notfall zu ermöglichen, dass das Schienenfahrzeug, insbesondere dessen Fahrerstand, schnell evakuiert werden kann. Denn die Einrichtung nimmt in der Gebrauchsstellung erheblichen Raum im Fahrerstand ein und behindert den Ausstieg. Darüber hinaus soll mit der Sitzeinrichtung auch gewährleistet sein, dass sie einfach aufgebaut ist, um sicherzustellen, dass sie für Beschädigungen und Verunreinigungen nicht anfällig und außerdem leicht reparierbar ist.

### Definition:

Soweit nachfolgend jeweils Begriffe in der Singularform verwendet werden, beispielsweise 'Sitzeinrichtung', 'Auszugsvorrichtung', '(Längs-)Führung', 'Auflagegestell', 'Leitelement' usw., so können darunter jeweils auch die entsprechenden Pluralformen zu verstehen sein, nämlich 'Sitzeinrichtungen', 'Auszugsvorrichtungen, '(Längs-)Führungen', 'Auflagegestelle', 'Leitelemente' usw. und umgekehrt, sofern nicht ausdrücklich etwas anderes angegeben ist.

### Grundzüge der Erfindung und bevorzugte Ausführunasformen:

Gemäß einem ersten Aspekt der vorliegenden Erfindung werden diese Aufgaben mit einer Baueinheit, umfassend, vorzugsweise gebildet durch, eine Sitzeinrichtung und eine Halterung für die Sitzeinrichtung, zur Anordnung in einem Schienenfahrzeug gelöst.

Gemäß einem zweiten Aspekt der vorliegenden Erfindung werden diese Aufgaben mit einem Verfahren zum Überführen der Sitzeinrichtung von einer Verstaustellung in eine Gebrauchsstellung gelöst.

Gemäß einem dritten Aspekt der vorliegenden Erfindung werden diese Aufgaben mit einem Schienenfahrzeug mit mindestens einer erfindungsgemäßen Baueinheit gelöst.

In erfindungsgemäßer Art und Weise ist die Halterung der erfindungsgemäßen Baueinheit von einem Stützelement in dem Schienenfahrzeug gehalten. Die Sitzeinrichtung ist von einer Gebrauchsstellung in eine Verstaustellung und umgekehrt überführbar. Die Sitzeinrichtung und die mindestens eine Halterung sind über korrespondierende Führungsmittel miteinander verbunden, sodass die Sitzeinrichtung relativ zu der mindestens einen Halterung verfahrbar ist. Die korrespondierenden Führungsmittel sind durch mindestens eine Auszugsvorrichtung und mindestens ein zu der mindestens einen Auszugsvorrichtung korrespondierendes Führungselement (Leitelement) gebildet. Die mindestens eine Auszugsvorrichtung ist über die mindestens eine Halterung an dem Stützelement verschwenkbar angelenkt. Die Sitzeinrichtung ist in der Verstaustellung in einer im Wesentlichen senkrechten Lage, d.h. vorzugsweise bis zu ± 30° zur Senkrechten, besonders bevorzugt genau senkrecht, angeordnet. Die mindestens eine Halterung ist durch eine die mindestens eine Auszugsvorrichtung aufweisende Klappenlade gebildet, wobei die Klappenlade von dem Stützelement verschwenkbar gehalten ist.

Das Schienenfahrzeug ist vorzugsweise eine Straßenbahn, kann aber auch ein anderes schienengebundenes Fahrzeug sein, wie beispielsweise ein Schienentriebfahrzeug, eine Lokomotive oder ein anderes Personenbeförderungsfahrzeug, insbesondere Personenbeförderungstriebfahrzeug, im Nah- und Fernverkehr. Grundsätzlich ist die vorliegende Erfindung in jedem Schienenfahrzeug einsetzbar, in dem eine Sitzeinrichtung, insbesondere in einem Fahrerstand, angeordnet werden soll. Für den Fall, dass die Sitzeinrichtung gemäß der vorliegenden Erfindung in einem Fahrerstand eingebaut sein soll, besteht die Möglichkeit, dass das Schienenfahrzeug aussichließlich an einem Ende einen Fahrerstand aufweist, oder das Schienenfahrzeug kann an beiden Enden jeweils einen Fahrerstand aufweisen. In letzterem Falle kann in jedem der beiden Fahrerstände oder nur in einem der beiden Fahrerstände eine Sitzeinrichtung gemäß der vorliegenden Erfindung installiert sein. Grundsätzlich ist es auch möglich, dass eine oder mehrere Sitzeinrichtungen gemäß der vorliegenden Erfindung im Passagierraum des Schienenfahrzeuges installiert sind.

Mit der erfindungsgemäßen Sitzeinrichtung ist gewährleistet, dass diese im Schienenfahrzeug, insbesondere im Fahrerstand, stets zur Verfügung steht und nicht bei Bedarf erst von einem anderen Ort innerhalb oder außerhalb des Fahrzeuges beschafft werden muss. Denn die Sitzeinrichtung ist in dem Schienenfahrzeug vor Ort fest installiert.

Die einfache Handhabung beim Aufstellen oder Verstauen der Sitzeinrichtung ermöglicht deren schnelle Verfügbarkeit und ebenso auch eine schnelle Überführung in die Verstaustellung. Dies wird durch einen einfachen Mechanismus, der hierfür vorgesehen ist, erreicht, sodass die Einrichtung stets und sofort einsatzbereit ist. Dadurch ist unter anderem gewährleistet, dass das Schienenfahrzeug, insbesondere der Fahrerstand in dem Schienenfahrzeug, in einem Notfall schnell evakuiert werden kann.

Durch die Halterung der Sitzeinrichtung über die verschwenkbar gehaltenen Auszugsvorrichtungen wird ein Platz sparender Aufbau geschaffen, mit dem der zur Verfügung stehende Raum insbesondere in der Verstaustellung der Sitzeinrichtung optimal genutzt wird. Indem nämlich die Sitzeinrichtung in der Verstaustellung in einer senkrechten Lage angeordnet ist, wird ein nur kleiner Bauraum für deren Unterbringung im Schienenfahrzeug benötigt. Insbesondere kann der Innenraum in dem Fahrzeug auch dann ausreichend groß ausgelegt werden, wenn die Breite des Fahrzeuges gering ist. Denn durch die Erfindung kann der zur Verfügung stehende Innenraum selbst bei geringer Baubreite des Fahrzeuges maximiert werden. Dies wird dadurch erreicht, dass sich das Sitzkonzept durch eine schmale Bauweise auszeichnet, womit der Platzbedarf im verstauten Zustand minimiert ist.

Für die Person, die die Sitzeinrichtung nutzt, steht mit der Sitzeinrichtung gemäß der Erfindung ein befriedigender Sitzkomfort zur Verfügung, da die kleine Bauform auch eine Unterbringung von gepolsterten Sitzen gewährleistet. Falls die Sitzeinrichtung im Fahrerstand installiert ist, kann sie als Fahrlehrersitz genutzt werden. Alternativ kann sie auch als Notsitz, beispielsweise für Passagiere, verwendet werden. Durch den einfachen Aufbau ist die Sitzeinrichtung nicht anfällig für Beschädigungen und Verunreinigungen und kann im Bedarfsfall leicht repariert werden.

Die Sitzeinrichtung kann beispielsweise in einem Geschränk in dem Schienenfahrzeug, insbesondere in einem Geschränk im Fahrerstand in dem Schienenfahrzeug, untergebracht sein. In diesem Falle kann die Sitzeinrichtung über die Auszugsvorrichtungen an einem Bauteil des Geschränks, beispielsweise an einer Innenwand, Seitenwand oder Vorderwand des Geschränks befestigt sein. Alternativ kann die Sitzeinrichtung auch an der Innenwand des Schienenfahrzeuges, insbesondere an einem Wandelement der Innen- oder Seitenwand, oder an Stützstreben im Wandbereich des Schienenfahrzeuges befestigt sein. Somit stellt das hierfür vorgesehene Bauteil des Geschränks oder die Innen-, Seiten- oder Vorderwand des Schienenfahrzeuges das Stützelement dar, das die Sitzeinrichtung über die Auszugsvorrichtungen hält. Die Halterung ist in Form einer Klappenlade ausgebildet. Diese kann am Geschränk oder an der Innenwand oder den Stützstreben im Wandbereich des Schienenfahrzeuges angelenkt sein. Die Auszugsvorrichtungen können durch Führungsnuten oder Führungsschienen gebildet sein, die an Innen- bzw. Seitenwänden des Geschränks oder an Stützstreben, die Innenwandelemente des Schienenfahrzeuges halten, oder an der Klappenlade angebracht sein. Alternativ können sich die Auszugsvorrichtungen an der Sitzeinrichtung befinden. In diesem Falle sind zu der jeweiligen Auszugsvorrichtung korrespondierende Führungselemente (Leitelemente) an dem Stützelement befestigt.

Aus den vorstehenden Erläuterungen ergibt sich, dass die Sitzeinrichtung in der Verstaustellung vorzugsweise vollständig in einem zum Innenraum des Schienenfahrzeuges durch Wände gebildeten Hohlraum angeordnet ist, der nach außen durch die Fahrzeug-Außenhaut abgeschlossen ist, beispielsweise innerhalb eines Geschränks, insbesondere im Fahrerraum des Schienenfahrzeuges, oder beispielsweise innerhalb eines Hohlraumes, der durch innere Wandelemente vom Innenraum des Schienenfahrzeuges, beispielsweise eines Passagier- oder Fahrerraumes, abgetrennt ist. Grundsätzlich ist es natürlich auch denkbar, dass sich die Sitzeinrichtung in der Verstaustellung nicht vollständig innerhalb dieses Hohlraumes befindet sondern nur teilweise und mit dem restlichen Teil in den Innenraum des Schienenfahrzeuges, beispielsweise den Fahrerraum, hineinragt.

In einer bevorzugten Weiterbildung der vorliegenden Erfindung kann vorgesehen sein, dass die Sitzeinrichtung an zwei einander gegenüberliegenden Längsseiten über die mindestens eine Auszugsvorrichtung gehalten wird. Dies ermöglicht eine stabile Halterung der Sitzeinrichtung an dem Stützelement, da die Sitzeinrichtung in diesem Falle über zwei Auszugsvorrichtungen gehalten wird. Grundsätzlich ist es natürlich auch möglich, die Sitzeinrichtung nur an einer Seite zu halten. Dies erfordert dann eine sehr solide und robuste Halterung an dieser Seite.

In noch einer weiteren bevorzugten Weiterbildung der vorliegenden Erfindung wird die mindestens eine Auszugsvorrichtung über die mindestens eine Halterung von dem Stützelement verschwenkbar gehalten, sodass die Sitzeinrichtung mit der Auszugsvorrichtung zum Überführen von der Verstau- in die Gebrauchsstellung zum Bediener hin zunächst in eine Bedienungsstellung verschwenkt werden kann, von der aus die Sitzeinrichtung in die Gebrauchsstellung überführbar ist. In der Bedienungsstellung ist die Sitzeinrichtung gegenüber der Verstaustellung um einen Verschwenkwinkel α gegen die Senkrechte oder die Verstaustellung geneigt (siehe unten). Die Verschwenkung gegenüber der Senkrechten oder gegenüber der Verstaustellung in die Bedienungsstellung erleichtert die Bedienung, weil die Sitzeinrichtung aus dieser Stellung dann einfach nach oben gezogen und dann in die Gebrauchsstellung überführt werden kann. Vor dem Verschwenken in die Bedienungsstellung behindern die den Hohlraum begrenzenden Wände das Ausfahren der Sitzeinrichtung in die Gebrauchsstellung. Die Sitzeinrichtung befindet sich in einer bevorzugten Ausführungsform in der Verstaustellung vollständig in dem Hohlraum und wird durch das Verschwenken der Auszugsvorrichtungen in die Bedienungsstellung teilweise aus dem Hohlraum herausgeschwenkt.

In einer ersten Ausführungsform der vorliegenden Erfindung, in der ein zu einer Auszugsvorrichtung korrespondierendes Führungselement (Leitelement) an der Sitzeinrichtung befestigt ist, können die Auszugsvorrichtungen bevorzugt in deren unterem Bereich (bezogen auf die Anordnung der Sitzeinrichtung in der Verstaustellung) an dem Stützelement angelenkt sein. In einer anderen zweiten Ausführungsform mit hierzu umgekehrter Kinematik, bei der die Auszugsvorrichtungen an der Sitzeinrichtung und die Leitelemente an dem Stützelement angebracht sind, können die Leitelemente bevorzugt in einem dem unteren Bereich (bezogen auf die Anordnung der Sitzeinrichtung in der Verstaustellung) der Auszugsvorrichtung entsprechenden Bereich an dem Stützelement angebracht sein.

In noch einer weiteren bevorzugten Weiterbildung der vorliegenden Erfindung weist die erfindungsgemäße Baueinheit an der zum Innenraum des Schienenfahrzeuges weisenden Seite ferner vorzugsweise ein Auflagegestell auf. Dieses Auflagegestell dient zur Auflage und Abstützung der Sitzeinrichtung in der Gebrauchsstellung, damit diese in der Gebrauchsstellung in einer horizontalen Lage angeordnet ist und sich eine Person darauf setzen kann. Das Auflagegestell nimmt das Gewicht der Sitzeinrichtung und der auf dieser sitzenden Person auf.

Alternativ hierzu kann die Sitzeinrichtung anstelle eines Auflagegestells auch mit einem Hilfsbein ausgestattet sein, das an der Unterseite der Sitzfläche angelenkt und zum Abstützen der Sitzeinrichtung auf der Bodenfläche des Innenraumes des Schienenfahrzeuges ausgeschwenkt werden kann. Die Klappenlade (siehe nachfolgend) weist bereits das äußere Wandelement als Auflagegestell auf.

Die mindestens eine Auszugsvorrichtung ist an der Klappenlade angebracht, die von dem Stützelement verschwenkbar gehalten wird. Die Klappenlade weist zumindest Seitenwände und das äußere Wandelement auf. Die mindestens eine Halterung für die Sitzeinrichtung ist durch die die mindestens eine Auszugsvorrichtung aufweisende Klappenlade gebildet. Die Klappenlade wird von dem Stützelement verschwenkbar gehalten. In diesem Falle ist die Sitzeinrichtung relativ zu und entlang den Auszugsvorrichtungen verfahrbar. Hierzu kann die Klappenlade in noch einer weiteren bevorzugten Weiterbildung der vorliegenden Erfindung jeweils eine Auszugsvorrichtung mit einer Führung, vorzugsweise mit einer Längsführung, an einander gegenüberliegenden Innenseiten, vorzugsweise an diesen Seitenwänden, aufweisen. Denn die Seitenwände der Klappenlade liegen vorzugsweise einander gegenüber, sodass die Führungen die dazwischen angeordnete Sitzeinrichtung führen und halten können. Diese Führungen können durch einfache Führungsnuten in den Seitenwänden oder durch Führungsschienen, die an den Innenseiten der Seitenwände befestigt sind, gebildet sein. Die zu den Auszugsvorrichtungen korrespondierenden Leitelemente sind in diesem Falle an der Sitzeinrichtung angeordnet. Alternativ können an den Seitenwänden der Klappenlade auch zu Auszugsvorrichtungen korrespondierende Leitelemente und an der Sitzeinrichtung die Auszugsvorrichtungen angeordnet sein.

Das äußere Wandelement der Klappenlade kann einen Teil der Außenwand beispielsweise eines Geschränks oder der Innenwand des Schienenfahrzeuges bilden, wenn sich die Sitzeinrichtung in der Verstaustellung befindet. Dieses äußere Wandelement kann mit der restlichen Außenwand des Geschränks oder der Innenwand zum Innenraum des Schienenfahrzeuges vorzugsweise bündig abschließen, sodass, abgesehen von gegebenenfalls vorhandenen Fugen zwischen diesem äußeren Wandelement und der restlichen Wand, zusammen mit der restlichen Wand eine durchgehende Wandfläche gebildet wird.

Die Seitenwände und das äußere Wandelement bilden vorzugsweise einen kastenähnlichen Aufbau, nämlich die Klappenlade. Hierzu können die Seitenwände vorzugsweise in einem rechten Winkel mit dem äußeren Wandelement verbunden sein.

Die (Längs-)Führung der Auszugsvorrichtung gemäß der vorliegenden Erfindung wird vorzugsweise durch ein langgestrecktes Konkavprofilelement gebildet, das weiter bevorzugt mindestens ein Leitelement, beispielsweise an der Sitzeinrichtung, darin translatorisch verfahrbar, besonders bevorzugt formschlüssig, hält. Die (Längs-)Führung kann in Form einer Profilschiene, beispielsweise aus Metall oder Kunststoff, ausgebildet sein. Das mindestens eine Leitelement, beispielsweise an der Sitzeinrichtung, ist vorzugsweise durch ein drehbares Element gebildet, das zum Beispiel auf einer Lauffläche der (Längs-)Führung abrollt, vorzugsweise auf einer Lauffläche an der Innenfläche des Konkavprofils. Es kann durch ein Rollen- oder Kugelelement gebildet sein. Alternativ kann das mindestens eine Leitelement auch in Form eines (nicht rollenden) Gleitelements ausgebildet sein. Alternativ dazu kann eine Auszugsvorrichtung in Form mindestens einer Nut in den Seitenwänden der Klappenlade gebildet sein.

Die Auszugsvorrichtungen sind vorzugsweise mit oberen Anschlagsvorrichtungen ausgestattet, damit die Sitzeinrichtung beim Herausfahren nicht aus der Führung austreten kann, d.h. dass beispielsweise die Leitelemente stets innerhalb des Konkavprofils laufen und dieses nicht verlassen können. Hierzu können die (Längs-)Führungen an den Enden durch eine Sperre verschlossen sein, insbesondere an dem der Anlenkstelle der Auszugsvorrichtung am Stützelement gegenüberliegenden Ende.

Die (Längs-)Führungen und deren Anschlagsvorrichtungen sind dazu ausgebildet, dass die Sitzeinrichtung bei maximalem Ausfahren der Sitzeinrichtung gegenüber den Auszugsvorrichtungen nicht nur parallel zu den (Längs-)Führungen verfahrbar sondern auch gegenüber den (Längs-)Führungen verschwenkbar ist:
Die Sitzeinrichtung kann über jeweils ein Leitelement mittels der (Längs-)Führungen an oder in den Seitenwänden der Klappenlade geführt werden. Dadurch ist eine Verschwenkung von der Bedienungsstellung in die Gebrauchsstellung um eine Achse senkrecht zur Längserstreckung der (Längs-)Führung zwar grundsätzlich möglich. Eine Verschwenkung wird jedoch bei nicht zumindest annähernd vollständigem Ausfahren des Sitzelements gegenüber den Auszugsvorrichtungen dadurch weitgehend verhindert, dass die Klappenlade zum Ausfahren aus der Verstaustellung nur um einen Winkel verschwenkt wird, der kleiner ist als der maximale Verschwenkwinkel a. Das äußere Wandelement der Klappenlade verhindert in diesem Fall, dass die Sitzeinrichtung aus einer Lage parallel zu den (Längs-)Führungen in die Gebrauchsstellung verschwenkt werden kann. Denn die Klappenlade ist vorzugsweise gerade ungefähr so viel aus der Verstaustellung heraus in die Bedienungsstellung verschwenkbar, dass die Sitzeinrichtung aus dem Hohlraum herausgefahren werden kann, ohne dabei durch Einbauten behindert zu werden. Die (Längs-)Führungen der Seitenwände der Klappenlade erstrecken sich vorzugsweise bis auf ein Niveau (vertikaler Abstand zum Bodenniveau des Innenraumes des Schienenfahrzeuges), das höher ist als das Niveau des oberen Randes des äußeren Wandelements der Klappenlade. Dadurch kann die Sitzeinrichtung nach dem vollständigen Ausfahren bis zum Anschlag in eine obere Stellung auf diesem oberen Rand aufliegen.

Ferner ist auch vorgesehen, dass die mindestens eine Auszugsvorrichtung bzw. die Klappenlade um einen maximalen Verschwenkwinkel α gegenüber dem Stützelement verschwenkbar ist. Hierzu können Winkelbegrenzungsvorrichtungen vorgesehen sein, die verhindern, dass die Auszugsvorrichtung bzw. die Klappenlade über den maximalen Verschwenkwinkel α hinaus aus der Verstaustellung heraus verschwenkt wird. Die Winkelbegrenzungsvorrichtungen können durch ein flexibles Verbindungselement, wie eine Kette, das mit seinen Enden an dem Stützelement und einer Auszugsvorrichtung bzw. der Klappenlade befestigt ist, realisiert sein. Alternativ können die Winkelbegrenzungsvorrichtungen auch durch Anschlagsblöcke gebildet sein, die sich an dem Stützelement befinden, d.h. dort angebracht oder integraler Teil dieses Elements sind, und gegen die die Auszugsvorrichtungen bzw. die Klappenlade beim Verschwenken anschlagen. Der maximale Verschwenkwinkel α kann bevorzugt in einem Bereich von 5° bis 85°, weiter bevorzugt in einem Bereich von 10° bis 45°, noch weiter bevorzugt in einem Bereich von 15° bis 30° und am meisten bevorzugt bei etwa 20°, gegenüber der Verstaustellung der Auszugsvorrichtung bzw. Klappenlade liegen.

Die vorstehenden Ausführungen zur Ausbildung der Auszugsvorrichtungen sind, wie vorstehend erläutert, ferner auch auf solche Ausführungsformen übertragbar, bei denen die Auszugsvorrichtungen nicht über die Halterungen an dem Stützelement befestigt sondern an der Sitzeinrichtung angeordnet sind, insbesondere an der Sitzfläche. In diesem Falle sind die Leitelemente an seitlich von der Sitzeinrichtung angeordneten Bauteilen an dem Stützelement angeordnet. Die (Längs-)Führungen sind in dieser Ausführungsform vorzugsweise an den Schmalseiten der Sitzeinrichtung, insbesondere der Sitzfläche, beispielsweise durch dort angebrachte Führungsschienen oder dort eingebrachte Führungsausnehmungen (-nuten) gebildet. Die Leitelemente können sich in diesem Falle an Armen befinden, die an den Wandelementen, beispielsweise des Geschränks oder der Innenwand des Schienenfahrzeuges, befestigt sind.

In noch einer weiteren bevorzugten Weiterbildung der vorliegenden Erfindung ist die Sitzeinrichtung durch eine Sitzfläche und eine Rückenlehne, die aneinander angelenkt sind, gebildet (Klappsitz), sodass die Sitzfläche und die Rückenlehne in der Verstaustellung aneinander anliegend anordenbar sind. In der Verstaustellung liegen vorzugsweise die Seiten der Sitzfläche und der Rückenlehne aneinander an, die in der Gebrauchsstellung mit der benutzenden Person in Kontakt kommen, beispielsweise dort vorhandene Polsterelemente.

Die Sitzfläche und die Rückenlehne sind vorzugsweise jeweils durch ein Rahmengestell und ein daran befestigtes Polster gebildet. Beim Überführen der Sitzeinrichtung in die Verstaustellung kommen vorzugsweise die Polster miteinander in Kontakt.

Die Sitzfläche und die Rückenlehne der Sitzeinrichtung sind vorzugsweise über ein Scharnier aneinander angelenkt.

Grundsätzlich ist es auch möglich, dass die Sitzeinrichtung ausschließlich eine Sitzfläche, nicht jedoch eine Rückenlehne aufweist.

In noch einer weiteren bevorzugten Weiterbildung der vorliegenden Erfindung liegt die Sitzfläche in der Gebrauchsstellung in einer horizontalen Lage auf dem mindestens einen maximal gegenüber dem Stützelement verschwenkten Auflagegestell auf, sodass eine Person auf der Sitzfläche bequem Platz nehmen kann. Hierzu sind Niveaus der oberen Anschlagsvorrichtungen an den Auszugsvorrichtungen und des oberen Randes des Auflagegestells oder des äußeren Wandelements der Klappenlade in geeigneter Weise zueinander auszurichten.

In noch einer weiteren Weiterbildung der vorliegenden Erfindung kann die Sitzeinrichtung, wenn diese durch eine Sitzfläche und eine Rückenlehne, die aneinander angelenkt sind, gebildet ist, in mindestens zwei verschiedenen Anordnungen an dem Stützelement gehalten sein:
In einer ersten Anordnungsvariante kann die Sitzeinrichtung derart an dem Stützelement angeordnet sein, dass die Schwenkachse, um die die Auszugsvorrichtungen gegenüber dem Stützelement verschwenkbar sind, senkrecht zu der Achse verläuft, um die die Sitzfläche und die Rückenlehne gegeneinander verschwenkbar sind (wobei letztere Achse horizontal verläuft). In diesem Falle ist es insbesondere bevorzugt, dass die Rückenlehne entgegen der Fahrtrichtung des Schienenfahrzeuges aufgerichtet werden kann, um die Sitzeinrichtung in die Gebrauchsstellung zu überführen. Die darauf Platz nehmende Person kann in diesem Falle in Fahrtrichtung des Fahrzeuges blicken. Die Sitzeinrichtung kann in diesem Falle vorteilhafter Weise einen Fahrlehrersitz in dem Fahrerstand des Schienenfahrzeuges bilden.

In einer zweiten Anordnungsvariante kann die Sitzeinrichtung derart an dem Stützelement angeordnet sein, dass die Schwenkachse, um die die Auszugsvorrichtungen gegenüber dem Stützelement verschwenkbar sind, parallel zu der Achse verläuft, um die die Sitzfläche und die Rückenlehne gegeneinander verschwenkbar sind. In diesem Falle ist es insbesondere bevorzugt, dass die Rückenlehne zur Innenwand des Schienenfahrzeuges hin aufgerichtet werden kann, um die Sitzeinrichtung in die Gebrauchsstellung zu überführen. Die darauf Platz nehmende Person kann in diesem Falle in den Innenraum des Fahrzeuges blicken. In diesem Falle bildet die Sitzeinrichtung einen Notsitz, der nicht nur im Fahrerstand des Schienenfahrzeuges sondern im gesamten Schienenfahrzeug, beispielsweise auch für Passagiere, eingesetzt werden kann.

In noch einer weiteren bevorzugten Weiterbildung der vorliegenden Erfindung ist die Sitzeinrichtung oder die die Sitzeinrichtung haltende Klappenlade gegen Verschwenken verriegelbar, sodass die Sitzeinrichtung nicht unbeabsichtigt aus dem Hohlraum ausgeschwenkt werden kann. Die Verriegelung kann auch dazu ausgebildet sein, eine unbefugte Benutzung zu verhindern (Versperrung). Zur Verriegelung dienen übliche Vorrichtungen, beispielsweise Schnappverschlüsse, Haken, Magnetverschlüsse, Vorhaltungen mit Schließeinrichtungen und dergleichen.

Das erfindungsgemäße Verfahren zum Überführen der Sitzeinrichtung von der Verstaustellung in die Gebrauchsstellung umfasst die folgenden Verfahrensschritte:
(a) Verschwenken der Sitzeinrichtung aus der Verstaustellung in eine Bedienungsposition; die Sitzeinrichtung wird zusammen mit der mindestens einen Halterung aus der Verstaustellung in die Bedienungsposition verschwenkt;
(b) Ausfahren der Sitzeinrichtung aus der Bedienungsposition relativ zu der mindestens einen Halterung bis zu einer oberen Stellung;
(c) Verschwenken der Sitzeinrichtung aus der oberen Stellung in die Gebrauchsstellung, in der die Sitzeinrichtung in einer horizontalen Stellung angeordnet ist.

Für die Überführung von der Gebrauchsstellung in die Verstaustellung wird umgekehrt vorgegangen.

Zur Überführung der Sitzeinrichtung von der Verstaustellung in die Gebrauchsstellung wird im Einzelnen in einem Schiebe/Zieh-Klapp-Mechanismus wie folgt vorgegangen:
Die Sitzeinrichtung ist mit ihren Leitelementen beispielsweise in (Längs-)Führungen seitlicher Führungsschienen geführt, sodass diese ungefähr am unteren Ende dieser (Längs-)Führungen platziert sind. Die Führungsschienen sind ebenso wie die Sitzeinrichtung in im Wesentlichen senkrechter Lage in einem Hohlraum, beispielsweise in einem Geschränk des Fahrerstandes, angeordnet. Die Sitzeinrichtung kann beispielsweise in einer Klappenlade in dem Geschränk untergebracht sein. Die Sitzeinrichtung, bestehend aus Sitzfläche und Rückenlehne, ist in dieser Konfiguration zusammengeklappt, d.h. die Sitzfläche und die Rückenlehne sind gegeneinander verschwenkt, sodass sie aneinander anliegen und ein Paket bilden, das in der Klappenlade untergebracht ist. Alternativ kann die Sitzeinrichtung auch ausschließlich aus einer Sitzfläche gebildet sein.

Da die Halterung für die Sitzeinrichtung beispielsweise in deren unterem Bereich im Geschränk vorzugsweise über Gelenke, die eine Verschwenkung um eine Horizontalachse zulassen, gelagert ist, kann die Sitzeinrichtung mit der Klappenlade um einen Verschwenkwinkel α von beispielsweise 20° aus der Senkrechten nach vorne herausgeschwenkt werden. Dadurch wird die in der Klappenlade angeordnete Sitzeinrichtung sichtbar. In dieser Position befindet sich die Sitzeinrichtung in der Bedienungsstellung.

Nach dem Herausschwenken der Klappenlade kann die Sitzeinrichtung - zunächst noch in der Konfiguration mit aneinander anliegender Sitzfläche und Rückenlehne - durch die (Längs-) Führungen geführt aus der Klappenlade nach oben herausgezogen werden. Diese translatorische Operation endet an oberen Anschlägen an den (Längs-)Führungen/Führungsschienen. In dieser oberen Stellung wird das Paket aus Sitzfläche und Rückenlehne in die Horizontale gekippt/verschwenkt, bis es auf dem äußeren Wandelement der Klappenlade aufliegt. In dieser Lage ist das Paket horizontal ausgerichtet. Wenn die Sitzeinrichtung eine Rückenlehne aufweist, kann diese dann aufgerichtet werden, d.h. entweder vorzugsweise entgegen der Fahrtrichtung oder zur Innenwand des Schienenfahrzeuges hin. In dieser Position befindet sich die Sitzeinrichtung schließlich in der Gebrauchsstellung.

Zum Verstauen der Sitzeinrichtung wird umgekehrt vorgegangen.

Entsprechendes gilt dann, wenn die (Längs-)Führungen nicht am Stützelement sondern an der Sitzeinrichtung angelenkt oder in der Sitzeinrichtung integral gebildet sind. Falls kein Auflagegestell vorhanden ist, wird ein Hilfsbein beim Verschwenken der Sitzeinrichtung in die Horizontallage ausgefahren, das sich dann auf der Bodenfläche des Innenraumes des Schienenfahrzeuges abstützt.

Zur näheren Veranschaulichung der vorliegenden Erfindung dienen die nachfolgend beschriebenen Figuren, anhand derer die Erfindung jedoch lediglich exemplarisch mit Ausführungsbeispielen erläutert wird.
- Fig. 1: zeigt einen Fahrerstand eines Schienenfahrzeuges in einer schematischen isometrischen Darstellung;
- Fig. 2: zeigt ein seitliches Geschränk, das in einem Fahrerstand eines Schienenfahrzeuges angeordnet ist, mit einer erfindungsgemäßen Baueinheit in der Verstaustellung für die Sitzeinrichtung gemäß der ersten Ausführungsvariante in einer schematischen isometrischen Darstellung;
- Fig. 3: zeigt das seitliche Geschränk von Fig. 2 mit der erfindungsgemäßen Baueinheit mit der Sitzeinrichtung in der Bedienungsstellung in einer schematischen isometrischen Darstellung;
- Fig. 4: zeigt das seitliche Geschränk von Fig. 2 mit der erfindungsgemäßen Baueinheit mit der Sitzeinrichtung in der Gebrauchsstellung in einer ersten Anordnungsvariante in einer schematischen isometrischen Darstellung;
- Fig. 5: zeigt das seitliche Geschränk von Fig. 2 mit der erfindungsgemäßen Baueinheit mit der Sitzeinrichtung in der Gebrauchsstellung in einer zweiten Anordnungsvariante in einer schematischen isometrischen Darstellung;
- Fig. 6: zeigt das seitliche Geschränk von Fig. 2 mit der erfindungsgemäßen Baueinheit mit der Sitzeinrichtung in der zweiten Anordnungsvariante in der Verstaustellung in einer schematischen Schnittansicht;
- Fig. 7: zeigt das seitliche Geschränk von Fig. 2 mit der erfindungsgemäßen Baueinheit mit der Sitzeinrichtung in der zweiten Anordnungsvariante in einer oberen Stellung (mit herausgezogener Sitzeinrichtung) in einer schematischen Schnittansicht;
- Fig. 8: zeigt das seitliche Geschränk von Fig. 2 mit der erfindungsgemäßen Baueinheit mit der Sitzeinrichtung in der zweiten Anordnungsvariante in der Gebrauchsstellung in einer schematischen Schnittansicht;
- Fig. 9: zeigt die Längsführungen mit den Leitelementen in einer schematischen Schnittansicht entlang A-A von Fig. 6;
- Fig. 10: zeigt das seitliche Geschränk von Fig. 2 mit der erfindungsgemäßen Baueinheit mit der Sitzeinrichtung in der ersten Anordnungsvariante in einer oberen Stellung (mit herausgezogener Sitzeinrichtung) in einer schematischen Schnittansicht.

In den Figuren bezeichnen gleiche Bezugszeichen gleiche Elemente und/oder Elemente mit derselben Funktion. Die Figuren zeigen die Gegenstände nicht in jedem Falle maßstäblich zueinander. Ferner sind auch die Größenverhältnisse einzelner Elemente zu denen anderer in einer Figur oder zwischen den Figuren nicht in jedem Falle maßstäblich zueinander dargestellt.

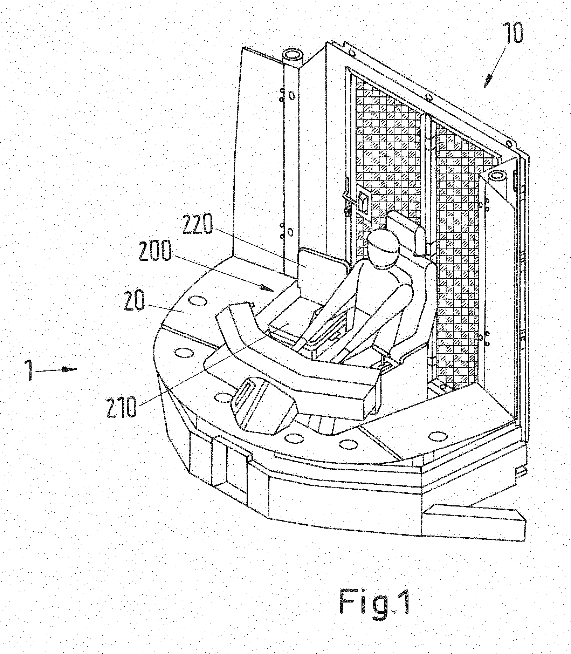

Die erfindungsgemäße Baueinheit 100 aus Sitzeinrichtung 200 und Halterung 300 in einem Schienenfahrzeug 1 ist insbesondere zur Verwendung in einem Fahrerstand 10 des Schienenfahrzeuges geeignet. Ein derartiger Fahrerstand in einem Straßenbahnfahrzeug ist in Fig. 1 gezeigt. Die Sitzeinrichtung ist im vorliegenden Fall durch eine Sitzfläche 210 und eine Rückenlehne 220 gebildet, die aneinander angelenkt sind. Grundsätzlich kann die Sitzeinrichtung auch alternativ ausschließlich durch eine Sitzfläche gebildet sein. In Fig. 1 ist die Sitzeinrichtung in der Konfiguration der ersten Anordnungsvariante mit einer entgegen der Fahrrichtung ausgerichteten Rückenlehne gezeigt.

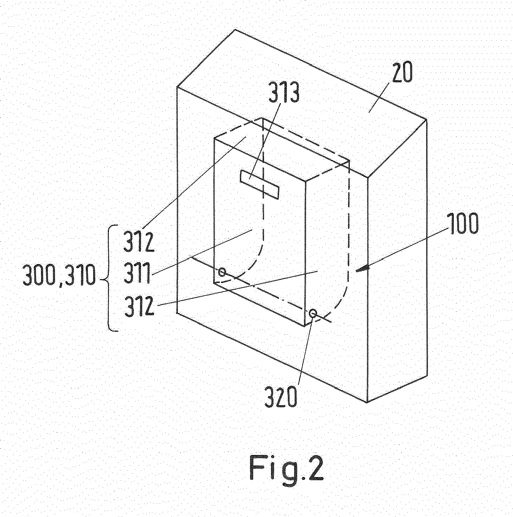

Die Baueinheit 100 ist im vorliegenden Fall in einem seitlichen Geschränk 20 untergebracht (Fig. 1, 2). Das Geschränk bildet ein Stützelement für die Baueinheit. Anstelle des Geschränks kann das Stützelement auch ein Wandelement sein, das den Innenraum des Schienenfahrzeuges nach außen begrenzt. Daher kann die erfindungsgemäße Baueinheit auch an anderer Stelle in dem Schienenfahrzeug eingebaut sein als im Fahrerstand 10, beispielsweise in einem Passagierraum.

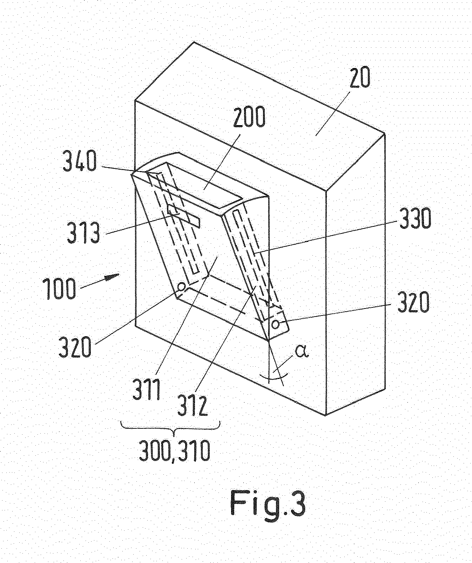

Die erfindungsgemäße Baueinheit 100 ist durch eine Sitzeinrichtung 200 und eine Halterung 300 in Form einer Klappenlade 310 gebildet. Diese Einheit ist in Fig. 2 in der Verstaustellung wiedergegeben, wobei die Sitzeinrichtung zur vereinfachten Darstellung nicht gezeigt ist (siehe hierzu Fig. 3 bis 5). Die Einheit ist in einem seitlichen Geschränk 20 untergebracht. Darin bildet die Klappenlade ein aufklappbares Fach, das um ein im unteren Bereich der Klappenlade befindliches Gelenk 320 nach vorn verschwenkbar ist (Fig. 3). Dieses Gelenk ist seitlich in den Wänden des Geschränks angeordnet (Befestigung nicht gezeigt). Die Klappenlade ist durch ein (vorderes) äußeres Wandelement 311 sowie durch zwei Seitenwände 312 gebildet. Diese Seitenwände weisen daran befestigte Auszugsvorrichtungen in Form von Führungsschienen 330 auf (Fig. 3 bis 10), die dazu vorgesehen sind, die in der Klappenlade befindliche Sitzeinrichtung darin zu halten und außerdem parallel zu den Längsführungen der Führungsschienen zu führen. Zum Vorschwenken der Klappenlade 310 ist beispielsweise ein Griff 313 in dem äußeren Wandelement 311 angebracht, beispielsweise in Form einer Griffmulde.

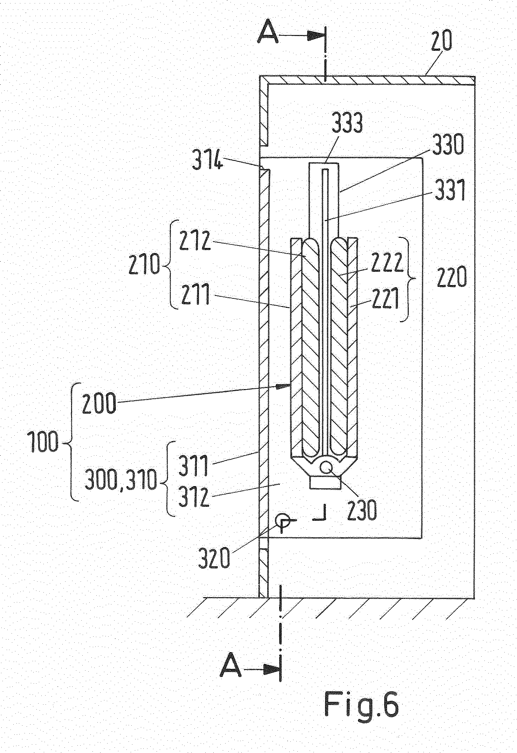

In Fig. 6 ist die Baueinheit 100 mit der Sitzeinrichtung 200 und der Halterung 300 in Form der Klappenlade 310 in einer seitlichen schematischen Schnittansicht gezeigt, wobei die Baueinheit in dem Geschränk 20 eingebaut ist.

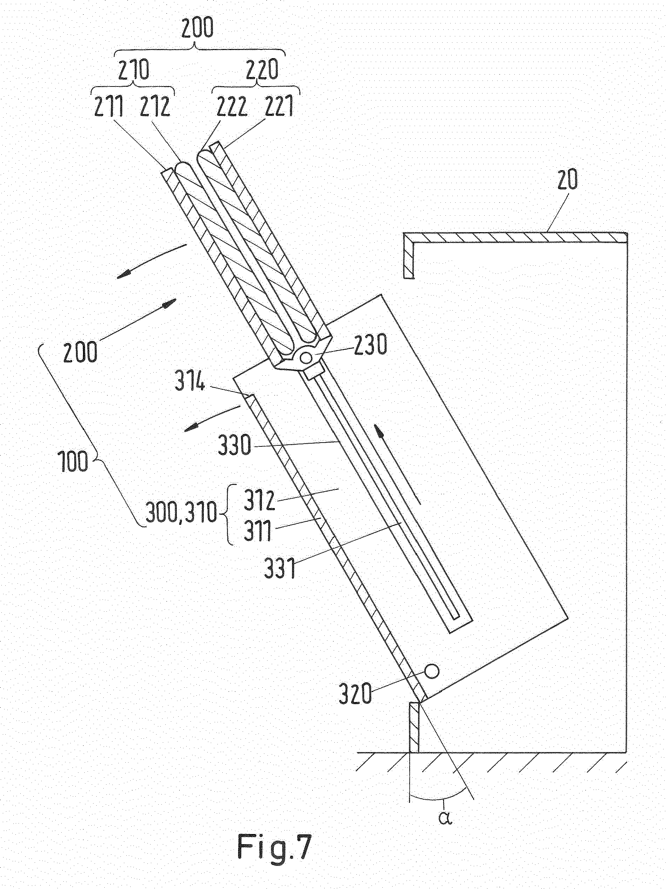

Die Klappenlade 310 ist wiederum durch ein äußeres Wandelement 311 und zwei Seitenwände 312 gebildet. In den beiden Seitenwänden befindet sich jeweils ein Gelenk 320, um die Klappenlade um einen Verschwenkwinkel α aus dem Geschränk herausschwenken zu können (siehe hierzu Fig. 3, 7).

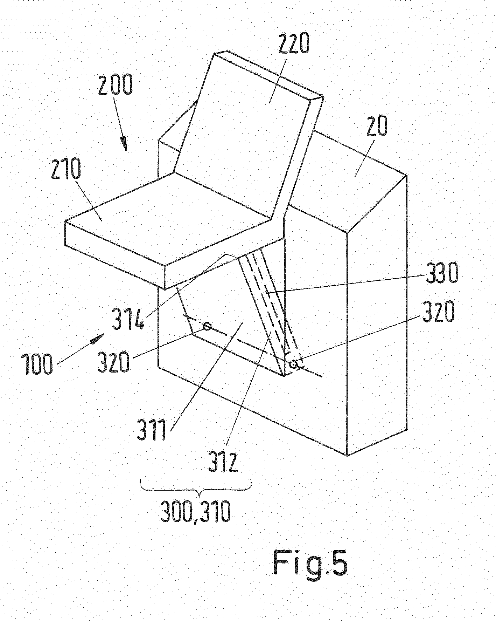

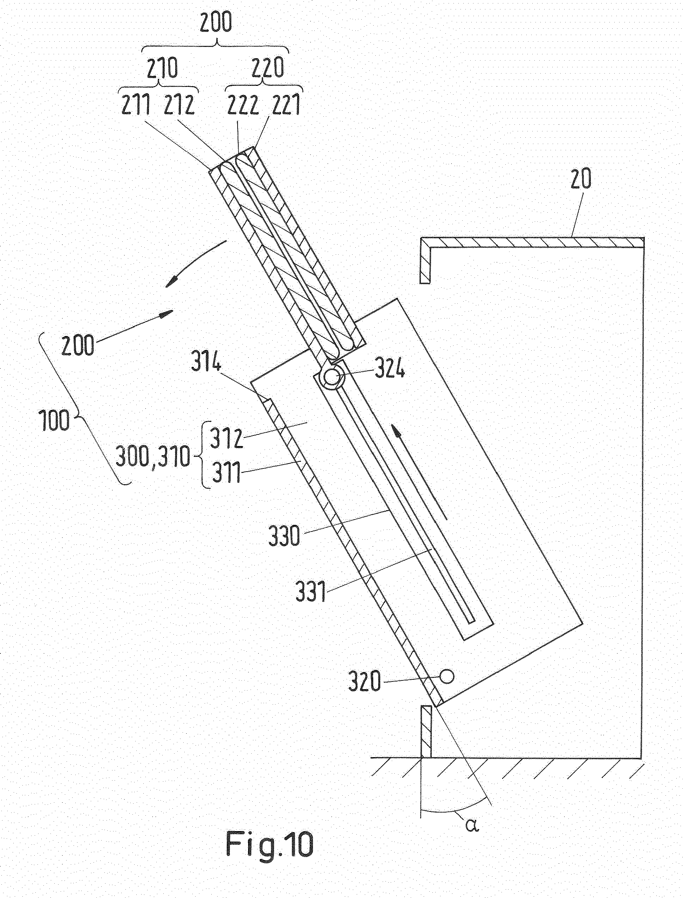

In der Klappenlade 310 ist die Sitzeinrichtung 200, gebildet durch die Sitzfläche 210 und die Rückenlehne 220 befestigt. Die Sitzfläche und die Rückenlehne sind über ein Sitzgelenk 230, die eine Verschwenkung um eine Horizontalachse zulässt, aneinander angelenkt. In der in Fig. 6 gezeigten Verstaustellung der Baueinheit 100 liegen die Sitzfläche und die Rückenlehne aneinander an. Die Sitzfläche ist durch einen Sitzbasiskörper 211 und ein Sitzpolster 212 gebildet, und die Rückenlehne ist durch einen Rückenlehnenbasiskörper 221 und ein Rückenlehnenpolster 222 gebildet. Die beiden Polsterteile 212, 222 liegen in der Verstaustellung, wie in Fig. 6 gezeigt, aneinander an. Die in dieser Figur gezeigte Ausführungsform zeigt den Notsitz von Fig. 5, bei dem die Sitzfläche und die Rückenlehne durch das Sitzgelenk 230 verbunden sind, deren Drehachse parallel zu der die Gelenke 320 der Klappenlade verbindenden Drehachse verläuft. Die vorstehenden und nachfolgenden Ausführungen beziehen sich auf diese zweite Anordnungsvariante der erfindungsgemäßen Baueinheit. Entsprechendes gilt aber auch für die erste Anordnungsvariante der erfindungsgemäßen Baueinheit, für die in Fig. 10 ein Beispiel gezeigt ist.

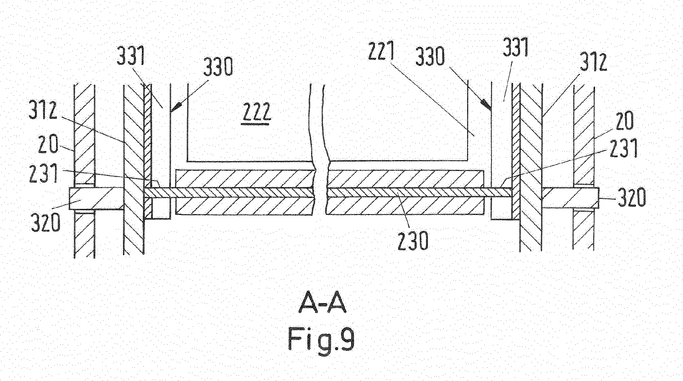

Die Sitzeinrichtung 200 ist mittels Führungsschienen 330 (Auszugsvorrichtungen) an der Klappenlade 310 befestigt. An der Innenseite jeder der beiden Seitenwände 312 der Klappenlade ist eine dieser Führungsschienen angeordnet. Die Führungsschienen liegen einander gegenüber, sodass die Sitzeinrichtung mit Leitelementen 231 (zu den Auszugsvorrichtungen korrespondierenden Führungselementen), beispielsweise Zapfen, in den Führungsschienen geführt wird. In Fig. 9 ist ein Schnitt A-A in der Ebene der Drehachse des Sitzgelenks 230 der Sitzeinrichtung gemäß Fig. 6 gezeigt. Die Führungsschienen bilden Längsführungen 331 in Form von Schlitzen. Die Schlitze befinden sich in den durch Konkavprofilschienen gebildeten Führungsschienen (Fig. 6). Die Leitelemente an der Sitzeinrichtung 200, insbesondere am Sitzbasiskörper 211, sind durch Führungsblöcke gebildet, die in den langgestreckten Längsführungen 331 in den Führungsschienen formschlüssig verfahrbar gehalten sind.

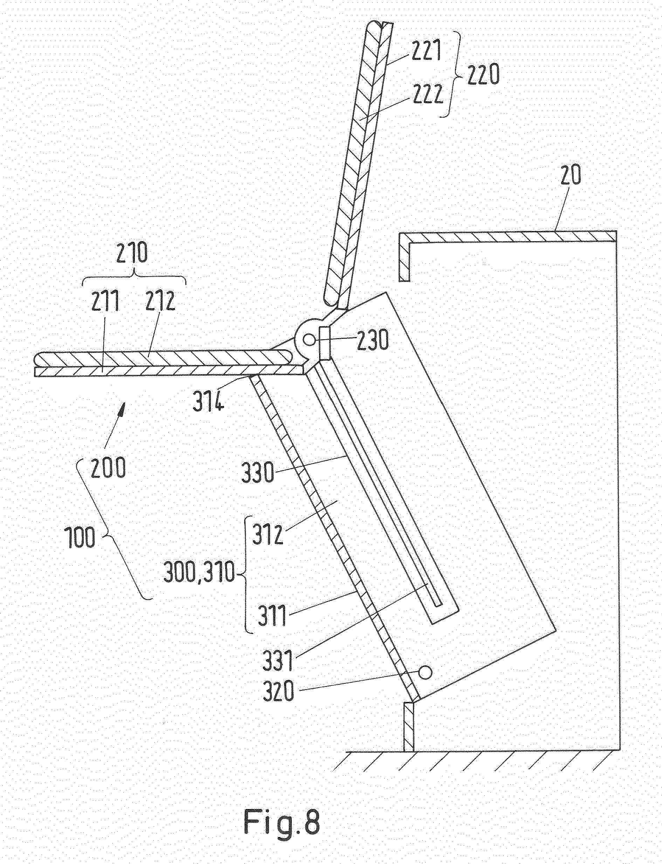

Zur Überführung der Sitzeinrichtung 200 von der Verstaustellung (Fig. 2, 6) zuerst in eine Bedienungsstellung (Fig. 3), dann in eine obere Stellung mit herausgezogener Sitzeinrichtung (Fig. 7) und dann in die Gebrauchsstellung (Fig. 5, 8) kann die Sitzeinrichtung zum Gebrauch umgebaut werden. Zur Überführung in die Bedienungsstellung wird die Klappenlade 310 aus dem Geschränk 20 beispielsweise um einen Verschwenkwinkel α = 20° heraus verschwenkt (Fig. 3). Damit die Klappenlade über diesen maximalen Verschwenkwinkel α hinaus nicht weiter geöffnet werden kann, weist sie eine Winkelbegrenzungsvorrichtung, wie eine Kette oder ein anderes Element, auf (nicht dargestellt).

Durch das Verschwenken der Klappenlade 310 mit der Sitzeinrichtung 200 wird letztere in der Klappenlade von oben sichtbar. Sie kann dann mit der Hand aus der Klappenlade herausgezogen werden. Dabei gleiten die Führungsblöcke der Leitelemente 231 in den Führungsschienen 330 (Fig. 9) bis zu einem oberen Anschlag 333 (Fig. 7; Anschlag siehe Fig. 6). Die Sitzeinrichtung wird dabei annähernd parallel zu den Führungsschienen geführt, da der Platz zwischen dem äußeren Wandelement 311 der Klappenlade und dem oberen Wandbereich des Geschränks 20 keine Bewegungsfreiheit dafür lässt, dass sich die Sitzeinrichtung gegenüber den Führungsschienen verschwenken lässt.

Erst wenn die Sitzeinrichtung 200 am oberen Anschlag 333 der Führungsschienen 330 angelangt ist, kann sie um die Gelenkachse des Sitzgelenks 230 bzw. der Zapfen 231 verschwenkt werden. Hierbei wird sie in die horizontale Lage befördert, sodass die Sitzfläche mit ihrem Sitzbasiskörper 211 auf dem oberen Rand 314 des äußeren Wandelements 311 (Auflagegestell) der Klappenlade 310 aufliegt (Fig. 5, 8).

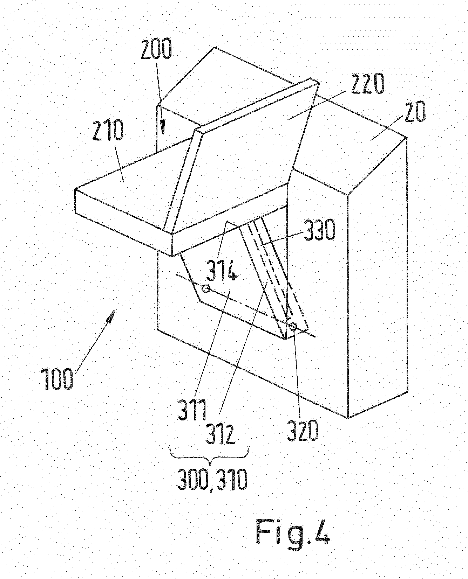

Die vorstehenden exemplarischen Erläuterungen der zweiten Anordnungsvariante der vorliegenden Erfindung sind gleichermaßen auch auf die erste Anordnungsvariante entsprechend anzuwenden, in der die Sitzeinrichtung 200 in der Fahrtrichtung des Schienenfahrzeuges angeordnet ist (Fig. 4). In Fig. 10 ist, entsprechend der Darstellung für die zweite Anordnungsvariante, eine Schnittansicht der Baueinheit 100 mit Sitzeinrichtung 200 und Halterung 300 (Klappenlade 310) in einem Geschränk 20 in der oberen Stellung auch für diese erste Anordnungsvariante gezeigt. In diesem Falle dient nicht die Gelenkachse des Sitzgelenks 230 (nicht dargestellt) zur Führung der Sitzeinrichtung in den Führungsschienen 330 (Auszugsvorrichtungen). Vielmehr sind hierfür die Leitelemente 231 an Befestigungen 234 am Sitzbasiskörper 211 der Sitzfläche 210 angebracht, die seitlich abstehen, sodass sie in die Längsführungen 331 der Führungsschienen eingreifen können. Im Übrigen wird bezüglich Fig. 10 auf die entsprechenden Bauelemente, die auch in Fig. 7 gezeigt sind, verwiesen.

Entsprechendes gilt auch für eine kinematische Umkehrung der Baueinheit 100, bei der die Auszugsvorrichtungen 330 an der Sitzeinrichtung 200 und die Leitelemente 231 an dem Geschränk 20 angebracht sind (nicht dargestellt).

### Bezugszeichen:

- 1: Schienenfahrzeug
- 10: Fahrerstand
- 20: (seitliches) Geschränk, Stützelement
- 100: Baueinheit
- 200: Sitzeinrichtung
- 210: Sitzfläche
- 211: Sitzbasiskörper
- 212: Sitzpolster
- 220: Rückenlehne
- 221: Rückenlehnenbasiskörper
- 222: Rückenlehnenpolster
- 230: Sitzgelenk
- 231: Leitelement, Führungsmittel, Zapfen
- 300: Halterung
- 310: Klappenlade
- 311: äußeres Wandelement, Auflagegestell
- 312: Seitenwände
- 313: Griff(mulde)
- 314: oberer Rand
- 320: Gelenk
- 330: Auszugsvorrichtung, Führungsschiene, Führungsmittel
- 331: Längsführung
- 333: oberer Anschlag
- 334: Befestigung
- α: Verschwenkwinkel

## Patentansprüche

1. Baueinheit (100), umfassend eine Sitzeinrichtung (200) und mindestens eine Halterung (300) für die Sitzeinrichtung (200), zur Anordnung in einem Schienenfahrzeug (1), wobei die mindestens eine Halterung (300) von einem Stützelement (20) in dem Schienenfahrzeug (1) gehalten ist und wobei die Baueinheit (100) folgende Merkmale umfasst:
- die Sitzeinrichtung (200) ist von einer Gebrauchsstellung in eine Verstaustellung und umgekehrt überführbar,
- die Sitzeinrichtung (200) und die mindestens eine Halterung (300) sind über korrespondierende Führungsmittel (231; 330) miteinander verbunden, sodass die Sitzeinrichtung (200) relativ zu der mindestens einen Halterung (300) verfahrbar ist, wobei die korrespondierenden Führungsmittel durch mindestens eine Auszugsvorrichtung (330) und mindestens ein zu der mindestens einen Auszugsvorrichtung (330) korrespondierendes Führungselement (231) gebildet sind,
- die mindestens eine Auszugsvorrichtung (330) ist über die mindestens eine Halterung (300) an dem Stützelement (20) verschwenkbar angelenkt,
- die Sitzeinrichtung (200) ist in der Verstaustellung in einer im Wesentlichen senkrechten Lage angeordnet,
**dadurch gekennzeichnet, dass** die mindestens eine Halterung (300) durch eine die mindestens eine Auszugsvorrichtung (330) aufweisende Klappenlade (310) gebildet ist, wobei die Klappenlade (310) von dem Stützelement (20) verschwenkbar gehalten ist.

2. Baueinheit (100) nach Anspruch 1, **dadurch gekennzeichnet, dass** die Sitzeinrichtung (200) an zwei einander gegenüberliegenden Längsseiten über die mindestens eine Auszugsvorrichtung (330) gehalten ist.

3. Baueinheit (100) nach einem der vorstehenden Ansprüche, **dadurch gekennzeichnet, dass** die Klappenlade (310) jeweils eine Auszugsvorrichtung (330) mit einer Längsführung (331) an einander gegenüberliegenden Innenseiten aufweist.

4. Baueinheit (100) nach einem der vorstehenden Ansprüche, **dadurch gekennzeichnet, dass** die Sitzeinrichtung (200) durch eine Sitzfläche (210) und eine Rückenlehne (220), die aneinander angelenkt sind, gebildet ist.

5. Baueinheit (100) nach Anspruch 4, **dadurch gekennzeichnet, dass** die Sitzfläche (210) und die Rückenlehne (220) in der Verstaustellung aneinander anliegend anordenbar sind.

6. Baueinheit (100) nach einem der vorstehenden Ansprüche, **dadurch gekennzeichnet, dass** die mindestens eine Auszugsvorrichtung (330) um einen maximalen Verschwenkwinkel (a) gegenüber dem Stützelement (20) verschwenkbar ist.

7. Baueinheit (100) nach einem der vorstehenden Ansprüche, **dadurch gekennzeichnet, dass** die Sitzeinrichtung (200) eine Sitzfläche (210) aufweist, die in der Gebrauchsstellung in einer horizontalen Lage auf einem maximal gegenüber dem Stützelement (20) verschwenkten Auflagegestell (311) aufliegt.

8. Baueinheit (100) nach einem der vorstehenden Ansprüche, **dadurch gekennzeichnet, dass** die Sitzeinrichtung (200) oder eine die Sitzeinrichtung (200) haltende Klappenlade (310) gegen Verschwenken verriegelbar ist.

9. Baueinheit (100) nach einem der vorstehenden Ansprüche, **dadurch gekennzeichnet, dass** die Sitzeinrichtung (200) in einem Fahrerstand (10) des Schienenfahrzeuges (1) angeordnet ist.

10. Verfahren zum Überführen einer Sitzeinrichtung (200) von einer Verstaustellung in eine Gebrauchsstellung, wobei sich die Sitzeinrichtung (200) zusammen mit mindestens einer diese haltenden Halterung (300) in einer Baueinheit (100) in einem Schienenfahrzeug (1) befindet, wobei die mindestens eine Halterung (300) von einem Stützelement (20) in dem Schienenfahrzeug (1) gehalten ist und die Baueinheit (100) folgende Merkmale aufweist:
- die Sitzeinrichtung (200) und die mindestens eine Halterung (300) sind über korrespondierende Führungsmittel (231; 330) miteinander verbunden, sodass die Sitzeinrichtung (200) relativ zu der mindestens einen Halterung (300) verfahrbar ist, wobei die korrespondierenden Führungsmittel durch mindestens eine Auszugsvorrichtung (330) und mindestens ein zu der mindestens einen Auszugsvorrichtung (330) korrespondierendes Führungselement (231) gebildet sind,
- die mindestens eine Auszugsvorrichtung (330) ist über mindestens eine Halterung (300) an dem Stützelement (20) verschwenkbar angelenkt,
- die Sitzeinrichtung (200) ist in der Verstaustellung in einer im Wesentlichen senkrechten Lage angeordnet,
- die mindestens eine Halterung (300) ist durch eine die mindestens eine Auszugsvorrichtung (330) aufweisende Klappenlade (310) gebildet, wobei die Klappenlade (310) von dem Stützelement (20) verschwenkbar gehalten ist,
umfassend folgende Verfahrensschritte
(a) Verschwenken der Sitzeinrichtung (200) aus der Verstaustellung in eine Bedienungsposition ;
(b) Ausfahren der Sitzeinrichtung (200) aus der Bedienungsposition relativ zu der mindestens einen Halterung (300) bis zu einer oberen Stellung;
(c) Verschwenken der Sitzeinrichtung (200) aus der oberen Stellung in die Gebrauchsstellung, in der die Sitzeinrichtung (200) in einer horizontalen Stellung angeordnet ist.

11. Schienenfahrzeug (1) mit mindestens einer Baueinheit (100), umfassend eine Sitzeinrichtung (200) und mindestens eine Halterung (300) für die Sitzeinrichtung (200), nach einem der Ansprüche 1 bis 9.

## Claims

1. An assembly (100) comprising a seat device (200) and at least one holding element (300) for the seat device (200), for arrangement in a railway vehicle (1), wherein the at least one holding element (300) is held in the rail vehicle (1) by a supporting element (20), and wherein the assembly (100) comprises the following features:
- the seat device (200) is transferrable from a usable position into a stowed position, and vice versa,
- the seat device (200) and the at least one holding element (300) are connected to one another via corresponding guide means (231; 330) so that the seat device (200) is movable relative to the at least one holding element (300), wherein the corresponding guide means are formed by at least one pull-out apparatus (330) and at least one guide element (231) corresponding to the at least one pull-out apparatus (330),
- the at least one pull-out apparatus (330) is hinged pivotably to the supporting element (20) via the at least one holding element (300),
- the seat device (200) is arranged in a substantially vertical position when stowed,
**characterised in that** the at least one holding element (300) is formed by a pivoting drawer (310) comprising the at least one pull-out apparatus (330), wherein the pivoting drawer (310) is held pivotably by the supporting element (20).

2. The assembly (100) according to claim 1, **characterised in that** the seat device (200) is held on two mutually opposed longitudinal sides via the at least one pull-out apparatus (330).

3. The assembly (100) according to either one of the preceding claims, **characterised in that** the pivoting drawer (310) on each of its mutually opposed inner sides comprises a pull-out apparatus (330) with a longitudinal guide (331).

4. The assembly (100) according to any one of the preceding claims, **characterised in that** the seat device (200) is formed by a seat face (210) and a backrest (220), which are hinged to one another.

5. The assembly (100) according to claim 4, **characterised in that** the seat face (210) and the backrest (220) are arranged lying one against the other when stowed.

6. The assembly (100) according to any one of the preceding claims, **characterised in that** the at least one pull-out apparatus (330) is pivotable relative to the supporting element (20) by a maximum pivot angle (α).

7. The assembly (100) according to any one of the preceding claims, **characterised in that** the seat device (200) has a seat face (210) which in the usable position rests horizontally on a support frame (311) pivoted maximally relative to the supporting element (20).

8. The assembly (100) according to any one of the preceding claims, **characterised in that** the seat device (200) or a pivoting drawer (310) holding the seat device (200) is lockable against pivoting.

9. The assembly (100) according to any one of the preceding claims, **characterised in that** the seat device (200) is arranged in a driver's cab (10) of the rail vehicle (1).

10. A method for transferring a seat device (200) from a stowed position into a usable position, wherein the seat device (200) together with at least one holding element (300) holding the seat device is situated in an assembly (100) in a rail vehicle (1), wherein the at least one holding element (300) is held in the rail vehicle (1) by a supporting element (20) and the assembly (100) has the following features:
- the seat device (200) and the at least one holding element (300) are connected to one another via corresponding guide means (231; 330) so that the seat device (200) is movable relative to the at least one holding element (300), wherein the corresponding guide means are formed by at least one pull-out device (330) and at least one guide element (231) corresponding to the at least one pull-out device (330),
- the at least one pull-out device (330) is hinged pivotably to the supporting element (20) via at least one holding element (300),
- the seat device (200) is arranged in a substantially vertical position when stowed,
- the at least one holding element (300) is formed by a pivoting drawer (310) comprising the at least one pull-out apparatus (330), wherein the pivoting drawer (310) is held pivotably by the supporting element (20),
the method comprising the following method steps
(a) pivoting the seat device (200) from the stowed position into an operating position;
(b) deploying the seat device (200) from the operating position relative to the at least one holding element (300) into an upper position;
(c) pivoting the seat device (200) from the upper position into the usable position, in which the seat device (200) is arranged in a horizontal position.

11. A railway vehicle (1) with at least one assembly (100), comprising a seat device (200) and at least one holding element (300) for the seat device (200), according to any one of claims 1 to 9.

## Revendications

1. Unité modulaire (100), comprenant un système formant siège (200) et au moins une fixation (300) pour le système formant siège (200), destinée à être disposée dans un véhicule sur rails (1), dans laquelle l'au moins une fixation (300) est maintenue par un élément d'appui (20) dans le véhicule sur rails (1) et dans laquelle l'unité modulaire (100) comprend des caractéristiques suivantes :
- le système formant siège (200) peut être transféré depuis une position d'utilisation dans une position de rangement et inversement,
- le système formant siège (200) et l'au moins une fixation (300) sont reliés l'un à l'autre par l'intermédiaire de moyens de guidage (231 ; 330) correspondants de sorte que le système formant siège (200) peut être déplacé par rapport à l'au moins une fixation (300), dans laquelle les moyens de guidage correspondants sont formés par au moins un dispositif de sortie (330) et au moins un élément de guidage (231) correspondant à l'au moins un dispositif de sortie (330),
- l'au moins un dispositif de sortie (330) est articulé de manière à pouvoir pivoter au niveau de l'élément d'appui (20) par l'intermédiaire de l'au moins une fixation (300),
- le système formant siège (200) est disposé dans la position de rangement dans une position sensiblement perpendiculaire,
**caractérisée en ce que** l'au moins une fixation (300) est formée par un tiroir rabattable (310) présentant l'au moins un dispositif de sortie (330), dans laquelle le tiroir rabattable (310) est maintenu de manière à pouvoir pivoter par l'élément d'appui (20).

2. Unité modulaire (100) selon la revendication 1, **caractérisée en ce que** le système formant siège (200) est maintenu au niveau de deux côtés longitudinaux se faisant face l'un l'autre par l'intermédiaire de l'au moins un dispositif de sortie (330).

3. Unité modulaire (100) selon l'une quelconque des revendications précédentes, **caractérisée en ce que** le tiroir rabattable (310) présente respectivement un dispositif d'extraction (330) avec un système de guidage longitudinal (331) au niveau de côtés intérieurs se faisant face les uns les autres.

4. Unité modulaire (100) selon l'une quelconque des revendications précédentes, **caractérisée en ce que** le système formant siège (200) est formé par une surface de siège (210) et un dossier (220), qui sont articulés l'un par rapport à l'autre.

5. Unité modulaire (100) selon la revendication 4, **caractérisée en ce que** la surface de siège (210) et le dossier (220) peuvent être disposés dans la position de rangement de manière à reposer l'un contre l'autre.

6. Unité modulaire (100) selon l'une quelconque des revendications précédentes, **caractérisée en ce que** l'au moins un dispositif de sortie (330) peut pivoter d'un angle de pivotement (α) maximal par rapport à l'élément d'appui (20) .

7. Unité modulaire (100) selon l'une quelconque des revendications précédentes, **caractérisée en ce que** le système de siège (200) présente une surface de siège (210), qui repose dans la position d'utilisation dans une position horizontale sur un châssis de support (311) pivoté au maximum par rapport à l'élément d'appui (20).

8. Unité modulaire (100) selon l'une quelconque des revendications précédentes, **caractérisée en ce que** le système formant siège (200) ou un tiroir rabattable (310) maintenant le système de siège (200) peut être verrouillé pour empêcher tout pivotement.

9. Unité modulaire (100) selon l'une quelconque des revendications précédentes, **caractérisée en ce que** le système formant siège (200) est disposé dans un poste de conduite (10) du véhicule sur rails (1).

10. Procédé servant à transférer un système formant siège (200) depuis une position de rangement dans une position d'utilisation, dans lequel le système formant siège (200) se trouve conjointement avec au moins une fixation (300) maintenant celui-ci dans une unité modulaire (100) dans un véhicule sur rails (1), dans lequel l'au moins une fixation (300) est maintenue par un élément d'appui (20) dans le véhicule sur rails (1) et l'unité modulaire (100) présente des caractéristiques suivantes :
- le système formant siège (200) et l'au moins une fixation (300) sont reliés l'un à l'autre par l'intermédiaire de moyens de guidage (231 ; 330) correspondants de sorte que le système formant siège (200) peut être déplacé par rapport à l'au moins une fixation (300), dans lequel les moyens de guidage correspondants sont formés par au moins un dispositif de sortie (330) et au moins un élément de guidage (231) correspondant à l'au moins un dispositif de sortie (330),
- l'au moins un dispositif de sortie (330) est articulé de manière à pouvoir pivoter au niveau de l'élément d'appui (20) par l'intermédiaire d'au moins une fixation (300),
- le système formant siège (200) est disposé dans la position de rangement dans une position sensiblement perpendiculaire,
- l'au moins une fixation (300) est formée par un tiroir rabattable (310) présentant l'au moins un dispositif de sortie (330), dans lequel le tiroir rabattable (310) est maintenu de manière à pouvoir pivoter par l'élément d'appui (20),
comprenant les étapes de procédé suivantes :
(a) le pivotement du système formant siège (200) depuis la position de rangement dans une position d'utilisation ;
(b) la sortie du système formant siège (200) hors de la position d'utilisation par rapport à l'au moins une fixation (300) jusque dans une position supérieure ;
(c) le pivotement du système formant siège (200) depuis la position haute dans la position d'utilisation, dans laquelle le système formant siège (200) est disposé dans une position horizontale.

11. Véhicule sur rails (1) avec au moins une unité modulaire (100), comprenant un système formant siège (200) et au moins une fixation (300) pour le système formant siège (200) selon l'une quelconque des revendications 1 à 9.
